# FASCICULE DE BREVET EUROPEEN

(11) **EP 0 856 117 B1**
(45) Date de publication et mention de la délivrance du brevet: **18.08.1999**
(21) Numéro de dépôt: 96934940.6
(22) Date de dépôt: 18.10.1996
(51) Int. Cl.: F16L 55/175, F16L 59/20, B29C 33/30, B28B 21/82

(54) **MANCHON MODULAIRE POUR LA PROTECTION, LA REPARATION OU LA RENOVATION D'UNE CANALISATION**
MODULARE MANSCHETTE ZUM SCHUTZ ZUR REPARATUR ODER ZUR AUSKLEIDUNG EINER ROHRLEITUNG
MODULAR SLEEVE FOR PROTECTING, REPAIRING OR RENOVATING A PIPE

(30) Priorité: 18.10.1995 FR 9512471
(43) Date de publication de la demande: 05.08.1998
(73) Titulaire: 3X Engineering, 98000 Monaco (MC)
(72) Inventeur: BOULET D'AURIA, Stanislas, F-06320 Cap d'Ail (FR)
(74) Mandataire: Bonneau, Gérard
(86) Numéro de dépôt international: FR9601637
(87) Numéro de publication internationale: WO9714909

(56) Documents cités:
- EP-A- 0 653 293
- GB-A- 2 119 884
- GB-A- 2 121 708
- US-A- 1 510 483
- US-A- 1 698 967

## Description

### Domaine technique :

La présente invention concerne la protection, la réparation ou la rénovation de canalisations de transport d'eau, de gaz ou autres fluides, et en particulier un manchon modulaire dans lequel est injectée de la matière polymérisable.

### Etat de la technique :

L'utilisation d'un manchon servant de moule d'injection est nécessaire, soit pour protéger le raccord entre deux tubes, soit pour colmater une fuite dans une canalisation. La portion à protéger ou à réparer est entourée du manchon qui forme une cavité étanche dans laquelle on injecte une matière liquide polymérisable qui, en se polymérisant, forme un revêtement de colmatage de fuite ou d'isolation thermique, chimique et anti-chocs.

Les manchons utilisés dans la technique actuelle décrits par exemple dans les brevets FR 2.158.895, EP 278.050, US 4.610.740 ou GB 2.119.884, sont formés de deux demi-coquilles cylindriques réunies pour ne former qu'une seule coquille recouvrant la portion à protéger ou à réparer. On verse ensuite la matière liquide polymérisable (constituée généralement des composants d'une résine époxyde ou d'une résine de polyuréthane) par un trou d'injection prévu dans la paroi de la coquille, dans la cavité ainsi formée.

Ces manchons formés de deux demi-coquilles sont donc adaptés pour une canalisation d'un diamètre déterminé. Il faut donc disposer de manchons de différents diamètres susceptibles de s'adapter aux différents diamètres de canalisations. Ceci entraîne donc la nécessité d'avoir des moules différents pour pouvoir fabriquer les demi-coquilles ayant des diamètres adaptés à toutes les canalisations, et entraîne donc un coût prohibitif.

### Exposé de l'invention :

C'est pourquoi le but de l'invention est de fournir un manchon constitué de modules identiques ne nécessitant ainsi qu'un seul moule de fabrication des modules, un tel manchon pouvant s'adapter à des canalisations de différents diamètres en faisant varier le nombre de modules qui constituent le manchon.

L'objet de l'invention est donc un manchon destiné à la protection, la réparation ou la rénovation d'une canalisation de transport d'eau, de gaz ou d'autres fluides, du type formant un moule d'injection entourant la portion de canalisation à protéger ou à réparer, dans lequel sont injectés les composants d'une matière polymérisable à l'état liquide qui, en se polymérisant, assure une protection ou un colmatage de la portion de canalisation recouverte, ledit manchon étant formé de plusieurs modules comportant chacun une partie mâle, une partie femelle et une partie intermédiaire, la partie mâle d'un module étant adaptée pour s'emboîter partiellement ou totalement dans la partie femelle du module contigu de manière à pouvoir ajuster le manchon à ladite canalisation dont le diamètre est situé dans une gamme déterminée.

### Description brève des dessins :

Les buts, objets et autres caractéristiques de l'invention ressortiront clairement de la description qui suit faite en référence aux dessins dans lesquels :
la figure 1 représente schématiquement un manchon modulaire recouvrant une portion de canalisation à protéger ou à réparer,
la figure 2 représente une vue de dessus d'un module de manchon selon un mode de réalisation préféré de l'invention,
la figure 3 représente une vue de côté, partiellement en coupe, d'un module de manchon selon un mode de réalisation préféré de l'invention,
la figure 4 représente schématiquement la coupe d'une portion de clipsage placée de chaque côté d'un module, et
la figure 5 est une représentation schématique de deux modules emboîtés l'un dans l'autre pour constituer un manchon selon l'invention.

### Description détaillée de l'invention :

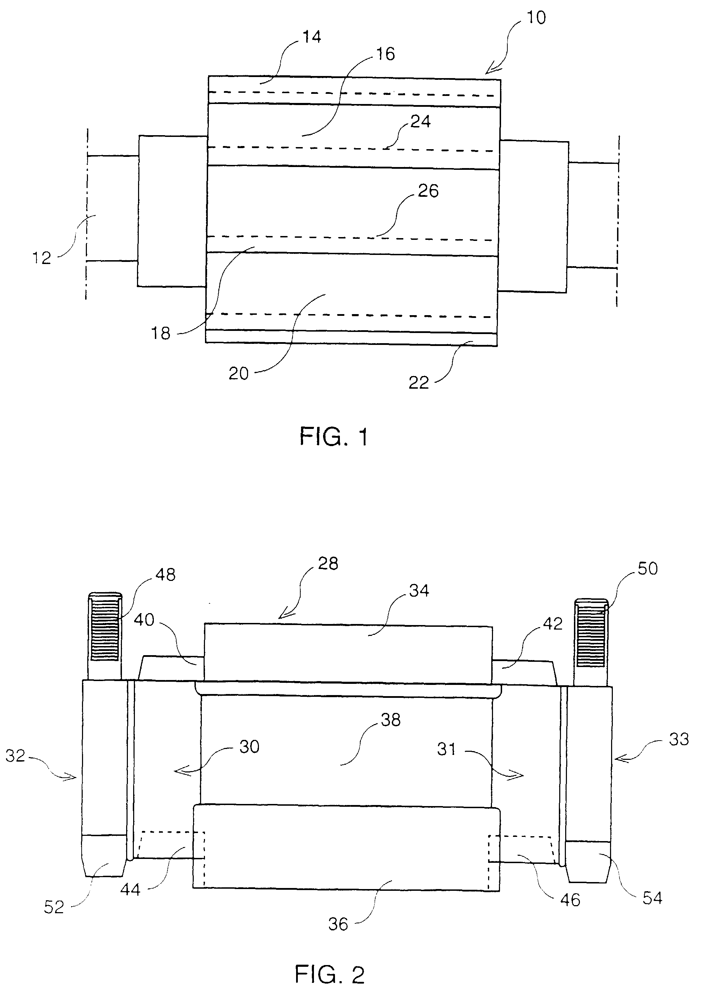

Sur la figure 1 est représenté schématiquement un manchon 10 recouvrant une portion d'un tuyau ou canalisation 12 nécessitant, soit d'être protégée (cas d'un raccord entre deux extrémités de tuyaux), soit d'être réparée (cas d'une fuite).

Le manchon 10 représenté sur la figure 1 est en matière plastique et est constitué de plusieurs modules identiques tels que les modules 14, 16, 18, 20 et 22 visibles sur la figure. Une partie de chacun des modules est emboîtée dans le module qui lui est contigu. Ainsi, le module 18 a une partie représentée par la ligne en pointillés 24 emboîtée dans le module 16, le module 20 a une partie représentée par la ligne en pointillés 26 emboîtée dans le module 18, etc.

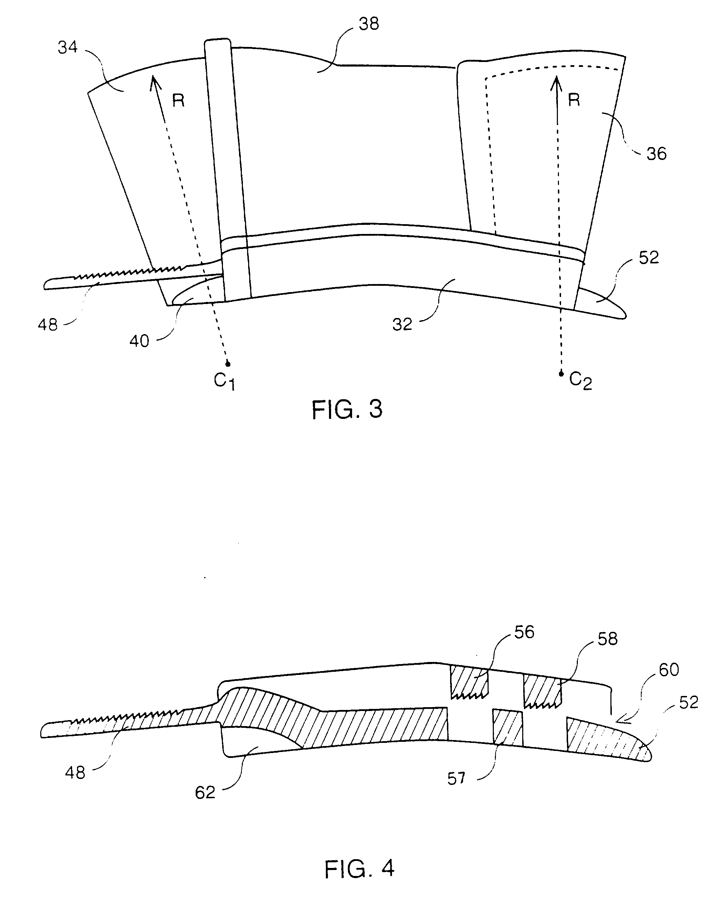

La description qui suit est relative à la structure de chaque module dont une représentation vue de dessus est illustrée sur la figure 2 et une représentation vue de côté est illustrée sur la figure 3.

Chacun des modules constituant le manchon comporte une portion centrale 28 qui constitue une partie du moule dans lequel la matière polymérisable est injectée, deux portions de serrage symétriques 30 et 31 de part et d'autre de la portion centrale, et deux portions de clipsage symétriques 32 et 33 de chaque côté des portions de serrage.

La portion centrale 28 comprend trois parties, une partie mâle 34, une partie femelle 36 et une partie intermédiaire 38. Comme illustré sur la figure 3, la partie mâle 34 a une surface extérieure en forme d'arc de cercle de rayon R et de centre C1 situé plus bas que le module. La partie femelle a une surface intérieure également en forme d'arc de cercle de rayon R et de centre C2 situé plus bas que le module. Du fait que le rayon extérieur de la partie mâle est égal au rayon intérieur de la partie femelle, la partie mâle de chaque module pourra s'emboîter facilement dans la partie femelle du module contigu.

Chacune des deux portions de serrage 30 et 31 situées de part et d'autre de la portion centrale comporte une patte 40 ou 42 en forme de triangle rectangle à l'hypoténuse convexe (voir figure 3), située du même côté que la partie mâle 34 de la portion centrale du module, et un évidemment 44 ou 46 de forme complémentaire à celle des pattes, situé du même côté que la partie femelle de la portion centrale. Ainsi, lorsqu'on emboîte la partie mâle d'un premier module dans la partie femelle d'un deuxième module contigu, on emboîte également les pattes 40 et 42 du premier module respectivement dans les évidements 44 et 46 du deuxième module.

De chaque côté des portions de serrage, se trouvent les deux portions de clipsage 32 et 33. Chacune des portions de clipsage comporte une languette 48 ou 50 crantée sur sa surface supérieure et située du même côté que la partie mâle de la portion centrale du module, ainsi qu'une patte 52 ou 54 en forme de triangle rectangle à l'hypoténuse convexe.

Comme illustré sur la figure 4 représentant la portion de clipsage 32 vue en coupe, l'intérieur de cette portion comprend des portions 56 et 58 crantées sur leur surface inférieure complémentaire de la surface supérieure crantée de la languette 48. Ainsi, lorsque le premier module est emboîté dans un deuxième module contigu, la languette 48 peut être insérée à l'intérieur de la portion de serrage 32 du deuxième module par l'ouverture située du côté opposé à la languette et en passant juste au-dessus de la patte 52. Au fur et à mesure que le premier module s'emboîte dans le deuxième module, les crans de la languette 48 du premier module s'engagent avec les crans des portions crantées 56 et 58, la languette étant maintenue par la portion non crantée 57. Les crans de la languette 48 et les crans complémentaires des portions 56 et 58 sont d'une forme dite en "dents de scie" de telle sorte qu'il est impossible à la languette de revenir en arrière lorsque ses crans sont engagés avec ceux des portions 56 et 58. L'effet obtenu est donc un effet "anti-retour" ou de clipsage des modules les uns par rapport aux autres.

Cependant, il peut arriver que les modules soient mal ajustés et que dans ce cas il soit nécessaire de désassembler les modules pour ensuite mieux les ajuster. Il est donc judicieux de prévoir la possibilité de déclipser les modules. Pour ce faire, on peut prévoir que la portion 57 (voir figure 4) située en regard des portions crantées 56 et 58, soit une pièce amovible de manière à pouvoir désengager la languette crantée des portions crantées 56 et 58 et retirer complètement ladite languette.

La portion de clipsage comporte également un évidemment de forme similaire et complémentaire à celle de la patte 52 et situé sous la languette 48 de telle sorte que, lorsqu'on emboîte un premier module dans un deuxième module, la patte 52 du deuxième module pénètre dans l'évidement 62 du premier module en même temps que la languette 48 du premier module pénètre à l'intérieur de la portion de clipsage 32 du deuxième module.

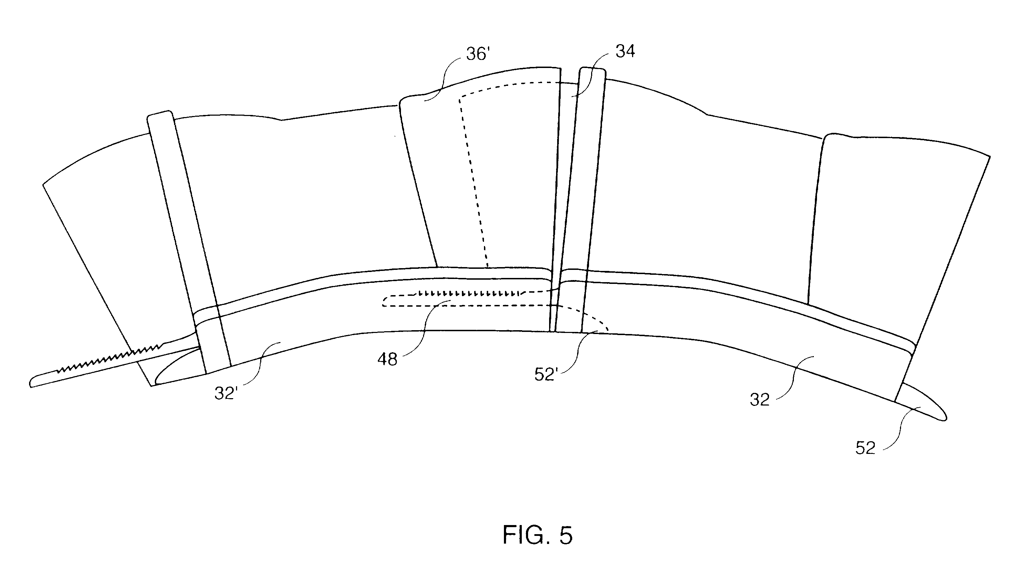

En définitive, la mise en place du manchon modulaire s'effectue en emboîtant chaque module dans le module qui lui est contigu de la façon illustrée sur la figure 5. La partie mâle 34 d'un premier module est emboîtée dans la partie femelle 36 d'un deuxième module contigu. En même temps, la languette crantée 48 (ou 50) de la portion de clipsage du premier module est insérée à l'intérieur de la portion de clipsage 32' du deuxième module. De façon automatique, les pattes (40 et 42) des portions de serrage du premier module pénètrent dans les évidements complémentaires (non montrés) des portions de serrage du deuxième module, et les pattes 52' (ou 54') du deuxième module pénètrent dans les évidements 44 (ou 46) du premier module.

Bien que non représentée sur les figures, une couche de mousse est collée sur la face intérieure des portions de serrage et/ou de clipsage de chaque module de façon à assurer une bonne étanchéité lorsque le manchon sera en place. Mais, il est également possible d'installer cette couche de mousse entre les modules et la canalisation au moment de la mise en place du manchon.

On doit noter que l'étanchéité de la cavité formée par la portion centrale du manchon constituée par l'emboîtement des parties mâle dans les parties femelle est assurée normalement par le fait que le rayon extérieur R de chaque partie mâle est égal au rayon intérieur R de chaque partie femelle. Toutefois, de façon à assurer une étanchéité parfaite, il est possible de prévoir un joint étanchéité sur le bord extérieur de la partie mâle pénétrant en premier dans la partie femelle du module contigu.

Un nombre variable de modules est utilisé selon le diamètre de la canalisation à protéger ou à réparer. Cependant, dans la majorité des cas, la partie mâle 34 ne pénètre pas entièrement dans la partie femelle 36', comme illustré sur la figure 5. Il en est de même de la languette crantée 48 qui ne pénètre qu'en partie à l'intérieur de la portion de clipsage 32'.

Au fur et à mesure que les modules sont emboîtés les uns dans les autres, l'effet anti-retour ou de clipsage est obtenu par la pénétration des languettes crantées dans les portions de clipsage, ce qui empêche les modules de se désemboîter une fois qu'ils ont été emboîtés. Il est d'ailleurs utile de prévoir un outil comportant deux branches destinées à enserrer les portions de clipsage et produire un effort de serrage sur lesdites portions de manière à obtenir un clipsage parfait.

Lorsque les modules ont été installés de façon la plus serrée possible autour de la canalisation, on immobilise le manchon à l'aide de deux sangles (non montrées) installées autour des portions de serrage des modules. Ce serrage est nécessaire pour obtenir une étanchéité parfaite grâce à la couche de mousse disposée entre la canalisation et les portions de serrage.

On doit noter que, de façon à pouvoir s'adapter à un grand éventail de diamètres de canalisations, la forme du profil inférieur de chaque module ne peut pas être circulaire. Comme on peut le voir sur la figure 3, ce profil est formé de deux parties droites reliées par une partie en arc de cercle. Ainsi, quel que soit le nombre de modules utilisé pour former le manchon, il n'y a pas de "cassures" ou points anguleux entre les modules. Dans la majorité des cas, la surface inférieure de chaque module est quasiment la continuité de la surface inférieure du module contigu, comme on peut s'en rendre compte sur la figure 5. Il faut noter toutefois que, le profil inférieur des modules ne pouvant pas épouser la surface extérieure de la canalisation, les écarts entre les deux surfaces sont compensées par l'écrasement plus ou moins important selon les endroits, de la mousse interposée entre les surfaces et destinée à assurer une bonne étanchéité.

Le manchon modulaire qui vient d'être décrit présente l'avantage de pouvoir constituer des manchons adaptés à différents diamètres de canalisations à l'aide de modules identiques, excepté que l'un des modules comporte un trou pour y injecter la matière polymérisable, et donc de disposer d'un seul moule servant à fabriquer tous les modules. Ainsi, avec un module dont la base de la portion centrale 32 mesure 80 mm, il est possible de constituer des manchons adaptés aux différents diamètres de tuyaux en utilisant un nombre de modules déterminés ci-dessous :

| C*diamètre du tuyau* | *nombre de modules* |
|---|---|
| 300 mm | 12 |
| 350 mm | 14 |
| 400 mm | 16 |
| 450 mm | 18 |
| 500 mm | 20 |
| 600 mm | 24 |

Un nombre déterminé de modules va donc correspondre à des diamètres de canalisations compris entre une valeur minimum et une valeur maximum. Par exemple, on utilisera 16 modules pour les canalisations dont le diamètre est compris entre 385 mm et 415 mm. Cette possibilité pour un nombre donné de modules, de s'adapter à plusieurs diamètres est obtenue grâce à l'emboîtement plus ou moins important de la partie mâle d'un module dans la partie femelle du module contigu, comme on l'a vu précédemment, mais également grâce à la compression plus ou moins importante de la couche de mousse placée sous les portions de serrage des modules.

## Revendications

1. Manchon (10) destiné à la protection, la réparation ou la rénovation d'une canalisation de transport d'eau, de gaz ou d'autres fluides, le manchon servant de moule pour entourer la portion de la canalisation à protéger ou à réparer dans lequel est injectée une matière à l'état liquide telle que de la résine de polyuréthane, qui, en se polymérisant, assure une protection ou un colmatage de la portion de canalisation recouverte par le manchon ;
ledit manchon étant caractérisé en ce qu'il est formé de plusieurs modules identiques (14, 16, 18, 20, 22) dont l'assemblage constitue ledit moule, comportant chacun une partie mâle (34) et une partie femelle (36) reliées par une partie intermédiaire (38), la partie mâle d'un module étant adaptée pour s'emboîter partiellement ou totalement dans la partie femelle du module contigu de manière à pouvoir ajuster le manchon à ladite canalisation dont le diamètre est situé dans une gamme déterminée.

2. Manchon (10) selon la revendication 1, dans lequel lesdites parties mâle (34), femelle (36) et intermédiaire (38) ont une forme cylindrique dans le sens longitudinal de la canalisation, ladite partie mâle ayant une section dont le profil extérieur est en arc de cercle de rayon R et ladite partie femelle ayant une section dont le profil intérieur est en arc de cercle également de rayon R de telle sorte que la partie mâle de chacun des modules constituant le manchon s'emboîte parfaitement par rotation dans la partie femelle du module qui lui est contiguë.

3. Manchon (10) selon la revendication 1 ou 2, dans lequel le profil intérieur de chacun desdits modules (14, 16, 18, 20, 22) est formé de deux parties droites reliées par un arc de cercle de sorte que la surface inférieure d'un module est sensiblement dans le prolongement de la surface inférieure du module contigu, après emboîtement des modules les uns dans les autres pour constituer le manchon.

4. Manchon (10) selon la revendication 1, 2 ou 3, dans lequel chacun desdits modules comporte en outre deux moyens de clipsage symétriques (48, 50) situés de chaque côté de la portion de module servant de moule, lesdits moyens de clipsage étant utilisés comme moyens anti-retour empêchant les modules de se désassembler au fur et à mesure que lesdites parties mâles (34) sont emboîtées dans lesdites parties femelle (36).

5. Manchon (10) selon la revendication 4, dans lequel chacun desdits moyens de clipsage (48, 50) comprend une languette crantée et au moins une portion crantée intérieure adaptée pour s'engager avec ladite languette crantée, disposés de façon à ce que lors de l'emboîtage de la partie mâle (34) d'un premier module dans la partie femelle (36) d'un deuxième module, la languette crantée du premier module pénètre à l'intérieur du moyen de clipsage du deuxième module et s'engage avec la portion crantée de celui-ci de manière à assurer un effet anti-retour.

6. Manchon (10) selon la revendication 4 ou 5, dans lequel chacun desdits modules (14, 16, 18, 20, 22) comprend en outre deux moyens de serrage symétriques (40, 42) situés chacun entre la portion de module servant de moule et l'un desdits moyens de clipsage (48, 50) destinés à serrer ledit manchon sur la canalisation après que lesdits modules ont été assemblés.

7. Manchon (10) selon la revendication 6, dans lequel lesdits moyens de serrage de chacun desdits modules (14, 16, 18, 20, 22) comportent chacun une portion de serrage (40, 42) adaptée pour s'emboîter dans la portion de serrage du module contigu lors de l'assemblage desdits modules, le serrage étant obtenu à l'aide de sangles entourant les portions de serrage des modules après leur assemblage.

8. Manchon (10) selon la revendication 7, dans lequel une couche de mousse est disposée entre la canalisation et lesdites portions de serrage (40, 42) dans le but d'assurer une bonne étanchéité du manchon lors de l'injection de la matière liquide polymérisable, ladite mousse étant comprimée au moment du serrage au moyen desdites sangles.

## Patentansprüche

1. Muffe (10) zum Schutz, zur Reparatur oder zur Erneuerung einer Leitung zur Beförderung von Wasser, Gas oder anderen Fluiden, wobei die Muffe als Form dient, mit der der zu schützende oder zu reparierende Abschnitt der Leitung umgeben wird, und in die ein Material in flüssigem Zustand wie Polyurethan eingespritzt wird, das, indem es polymerisiert, einen Schutz oder eine Abdichtung des mit der Muffe bedeckten Leitungsabschnitts gewährleistet, wobei diese Muffe dadurch gekennzeichnet ist, daß sie von mehreren identischen Modulen (14, 16, 18, 20, 22) gebildet ist, deren Zusammenfügung die Form bildet und die jeweils einen Einsteckteil (34) und einen Aufnahmeteil (36) aufweisen, die durch einen Zwischenteil (38) verbunden sind, wobei der Einsteckteil eines Moduls dafür ausgelegt ist, partiell oder vollständig in den Aufnahmeteil des benachbarten Moduls eingesteckt zu werden, so daß die Muffe an die Leitung angepaßt werden kann, deren Durchmesser in einem bestimmten Bereich liegt.

2. Muffe (10) nach Anspruch 1, bei der der Einsteckteil (34), der Aufnahmeteil (36) und der Zwischenteil (38) eine zylindrische Form in der Längsrichtung der Leitung besitzen, wobei der Einsteckteil einen Querschnitt besitzt, dessen Außenprofil die Form eines Kreisbogens mit dem Radius R hat, und der Aufnahmeteil einen Querschnitt besitzt, dessen Innenprofil die Form eines Kreisbogens ebenfalls mit dem Radius R hat, so daß der Einsteckteil jedes der die Muffe bildenden Module durch Drehung vollkommen in den Aufnahmeteil des ihm benachbarten Moduls eingreift.

3. Muffe (10) nach Anspruch 1 oder 2, bei der das Innenprofil jedes der Module (14, 16, 18, 20, 22) von zwei geraden Teilen gebildet ist, die durch einen Kreisbogen miteinander verbunden sind, so daß die Unterseite eines Moduls nach dem Ineinanderstecken der Module zur Bildung der Muffe im wesentlichen in der Verlängerung der Unterseite des benachbarten Moduls liegt.

4. Muffe (10) nach Anspruch 1, 2 oder 3, bei der jedes der Module außerdem zwei symmetrische Einrastmittel (48, 50) aufweist, die zu beiden Seiten des als Form dienenden Modulabschnitts gelegen sind und als Rücklaufsperrmittel benutzt werden, die verhindern, daß sich die Module in dem Maße voneinander lösen, in dem die Einsteckteile (34) in die Aufnahmeteile (36) gesteckt werden.

5. Muffe (10) nach Anspruch 4, bei der jedes der Einrastmittel (48, 50) eine gezahnte Zunge und mindestens einen mit der gezahnten Zunge in Eingriff bringbaren gezahnten Innenbereich aufweist, die so angeordnet sind, daß beim Einstecken des Einsteckteils (34) eines ersten Moduls in den Aufnahmeteil (36) eines zweiten Moduls die gezahnte Zunge des ersten Moduls in das Innere des Einrastmittels des zweiten Moduls eintritt und mit dessen gezahnten Bereich in Eingriff kommt, so daß eine Rücklaufsperrwirkung erzeugt wird.

6. Muffe (10) nach Anspruch 4 oder 5, bei der jedes der Module (14, 16, 18, 20, 22) außerdem zwei symmetrische Spannmittel (40, 42) aufweist, die jeweils zwischen dem als Form dienenden Modulteil und einem der Einrastmittel (48, 50) liegen und dafür bestimmt sind, die Muffe nach Zusammenfügung der Module auf der Leitung festzuspannen.

7. Muffe (10) nach Anspruch 6, bei der die Spannmittel jedes dieser Module (14, 16, 18, 20, 22) jeweils einen Spannbereich (40, 42) aufweisen, der dafür ausgelegt ist, bei der Zusammenfügung dieser Module in den Spannbereich des benachbarten Moduls eingesteckt zu werden, wobei die Einspannung mit Hilfe von Gurten erhalten wird, die die Spannbereiche der Module nach ihrer Zusammenfügung umgeben.

8. Muffe (10) nach Anspruch 7, bei der eine Schaumschicht zwischen der Leitung und den Spannbereichen (40, 42) angeordnet ist, um eine gute Abdichtung der Muffe bei der Einspritzung des polymerisierbaren flüssigen Materials zu gewährleisten, wobei dieser Schaum bei der Einspannung mit Hilfe der Gurte komprimiert wird.

## Claims

1. A sleeve (10) for protecting, repairing or renovating a pipe carrying water, gas or other fluids, said sleeve forming a mould for surrounding the pipe portion to be protected or repaired, wherein is injected a liquid material such as polyurethane resin that, when polymerizing, provides the protection or the sealing of the pipe portion covered by the sleeve,
said sleeve being characterized in that it is composed of a plurality of identical modules (14, 16, 18, 20, 22) whose assembling makes up said mould, each comprising a male part (34) and a female part (36) linked by an intermediate part (38), the male part of a module being designed to fit partially or fully into the female part of the adjacent module so as to fit the sleeve to said pipe whose diameter is located within a given range.

2. The sleeve (10) according to claim 1, wherein said male parts (34), female parts (36), and intermediate parts (38) have a cylindrical shape in the longitudinal direction of the pipe, the cross-section outer profile of said male part having the shape of an arc of a circle with radius R and the cross-section inner profile of said female part having the shape of an arc of a circle also with radius R so that the male part of each of the modules that make up the sleeve fit perfectly by rotation into the female part of the adjacent module.

3. The sleeve (10) according to claims 1 or 2, wherein the inner profile of each of said modules (14, 16, 18, 20, 22) is made up of two straight parts linked by an arc of a circle so that the inner surface of a module be substantially in line with the inner surface of the adjacent module when the modules are fitted into each other to make up the sleeve.

4. The sleeve (10) according to claims 1, 2 or 3, wherein each of said modules moreover comprises two symmetrical fastening means (48, 50) located on both sides of the module portion used as a mould, said fastening means being used as anti-return means for preventing modules from being disassembled as said male parts (34) are fitted into said female parts (36).

5. The sleeve (10) according to claim 4, wherein each of said fastening means (48, 50) comprises a notched tongue and at least an inner notched portion designed to gear with said notched tongue, arranged so that, when fitting the male part (34) of a first module into the female part (36) of a second module, the notched tongue of the first module get into the fastening means of the second module and gear with the notched portion of the latter so as to provide an anti-return effect.

6. The sleeve (10) according to claims 4 or 5, wherein each of said modules (14, 16, 18, 20, 22) comprises besides two symmetrical fastening means (40, 42) each located between the module portion used as a mould and one of said fastening means (48, 50) meant for tightening said sleeve around the pipe when said modules are assembled.

7. The sleeve (10) according to claim 6, wherein said fastening means of each of said modules (14, 16, 18, 20, 22) comprise a tightening portion (40, 42) designed to fit into the tightening portion of the adjacent module when the modules are being assembled, the tightening being provided by means of straps surrounding the tightening portions of modules after they are assembled.

8. The sleeve (10) according to claim 7, wherein a foam layer is arranged between the pipe and said tightening portions (40, 42) with the aim of providing a good tightness of the sleeve when the polymerizable liquid material is injected, said foam being compressed when tightening is carried out by means of said straps.
